# EUROPÄISCHE PATENTSCHRIFT

(11) **EP 3 311 471 B1**
(45) Veröffentlichungstag und Bekanntmachung des Hinweises auf die Patenterteilung: **21.04.2021**
(21) Anmeldenummer: 16725141.2
(22) Anmeldetag: 26.05.2016
(51) Int. Cl.: H02K 15/04, H02K 15/06, H02K 3/50, H02K 3/28, H02K 3/12, H02K 15/12, H02K 7/18

(54) **VERFAHREN ZUM HERSTELLEN EINES STATORS EINES GENERATORS EINER WINDENERGIEANLAGE, SOWIE FORMSPULE, WICKLUNGSAUFBAU UND STATOR**
METHOD FOR PRODUCING A STATOR OF A GENERATOR OF A WIND TURBINE, AND FORM-WOUND COIL, WINDING STRUCTURE AND STATOR
PROCÉDÉ DE FABRICATION D'UN STATOR D'UN GÉNÉRATEUR D'UNE ÉOLIENNE, ET BOBINE FORMÉE SUR GABARIT, STRUCTURE D'ENROULEMENT ET STATOR

(30) Priorität: 19.06.2015 DE 102015211356
(43) Veröffentlichungstag der Anmeldung: 25.04.2018
(73) Patentinhaber: Wobben Properties GmbH, 26607 Aurich (DE)
(72) Erfinder: HÖLSCHER, Holger, 26725 Emden (DE); MÖHLMANN, Gerald, 26817 Rhauderfehn (DE); PICHOL, Heino, 26603 Aurich (DE); RÖER, Jochen, 27777 Ganderkesee (DE)
(74) Vertreter: Eisenführ Speiser
(86) Internationale Anmeldenummer: PCT/EP2016/061916
(87) Internationale Veröffentlichungsnummer: WO 2016/202548

(56) Entgegenhaltungen:
- EP-A1- 0 766 882
- WO-A1-2011/039818
- WO-A1-2015/019778
- CN-U- 201 708 661
- DE-B- 1 167 968
- JP-A- H0 851 750
- JP-A- 2001 510 320
- JP-A- 2009 195 007
- JP-A- 2010 110 122
- JP-A- 2012 186 976
- JP-A- 2013 201 838
- US-A- 1 407 033
- US-A1- 2004 261 885
- US-A1- 2005 189 833
- US-A1- 2013 200 743

## Beschreibung

Die Erfindung betrifft ein Verfahren zum Herstellen eines Stators eines Generators einer getriebelosen Windenergieanlage. Ferner betrifft die Erfindung eine Formspule und einen Wicklungsaufbau eines Stators eines Generators einer Windenergieanlage sowie einen Stator.

Es sind Statoren von Generatoren getriebeloser Windenergieanlagen bekannt, die mehrere Stränge mit jeweils mehreren Wicklungen aufweisen. Diese Wicklungen werden mit einem isolierten Draht, zum Beispiel aus Kupfer, erzeugt. Hierzu wird in die Nuten des Stators der Draht eines Strangs eingewickelt, sodass ein Strang aus einem durchgängigen Stück des Drahts hergestellt wird. Dieses Wickeln des Stators ist sehr aufwändig und muss sinnvollerweise von Hand erfolgen, um - insbesondere in den Biegestellen - die Unversehrtheit der Drähte sowie auch der Isolierung des Drahts schon während des Wickelns zu überwachen.

Außerdem ist aus US 2005/0189833 A1 eine Wicklungsstruktur eines Motors oder Generators bekannt, die durch Kombination mehrerer separater, unterschiedlich geformter, Stableiter gebildet wird. Diese Wicklungsstruktur wird anstelle einer konventionellen Wicklungsstruktur mit gewickeltem Draht eingesetzt. Die Wicklungsstruktur wird durch die Stableiter gebildet, indem die gegeneinander isolierten Stableiter in Spulennuten des Stators eingesetzt werden, wobei dann deren Stirnseiten über Stabverbinder verbunden werden.Ferner sind Formspulen bekannt, die vorgefertigten Windungen eines leitenden Materials entsprechen und direkt in die Nuten eines Stators eingesetzt werden. Die Formspulen weisen weit über die Statornut hinausragende Anschlüsse auf, mit denen die einzelnen Formspulen durch Löten oder Schweißen miteinander verbunden werden, sodass sich die gewünschte elektrischer Verschaltung des gesamten Wicklungsaufbaus ergibt. Beispielsweise in EP 0 766 882 A1 sind derartige Formspulen für einen Stator sowie das Einsetzen derartiger Formspulen in den Stator offenbart.

Die Anschlüsse müssen aufgrund der hohen Hitzeentwicklung beim Löten weit von der Nut beabstandet sein, sodass die Formspule im Bereich der Nut nicht zu heiß wird und so zu Beschädigung des Stators, insbesondere einer Isolierung gegenüber dem Stator führt. Daher weisen derartige Statoren eine besonders hohe axiale Tiefe auf.

Ferner besteht die Gefahr Formspulen beim Einsetzen in die vorgesehen Nuten zu beschädigen, da sich die Schenkel der einzelnen Formspulen im eingesetzten Zustand überschneiden oder überlappen und daher beim Einsetzen der letzten Formspulen in die vorgesehenen Nuten, die zuerst eingesetzten Formspulen ganz oder zumindest teilweise wieder aus den Nuten herausgezogen werden müssen, um diese Überlappung zu erzeugen. Hierbei können die Formspulen durch das ganz oder insbesondere durch das teilweise herausziehen aus den Nuten beschädigt, insbesondere plastisch verformt werden, sodass das wiedereinsetzen erschwert wird und nach dem späteren wiedereinsetzen in die Nuten eine unerwünschte Spannung in der Formspulen vorhanden sein kann.

Das Deutsche Patent- und Markenamt hat in der prioritätsbegründenden deutschen Patentanmeldung die folgenden Dokumente recherchiert: Schmidt, W. [et al.]: "Umweltverträgliche Harzimprägnierung elektrischer Maschinen mittels Stromwärme", Tzscheutschler, R. [et al.]: "Technologie des Elektromaschinenbaus", Heilles, Franz: "Wicklungen elektrischer Maschinen" sowie Wiedemann, E. [et al.]: "Konstruktion elektrischer Maschinen".

Der Erfindung liegt somit die Aufgabe zugrunde, wenigstens eines der genannten Probleme anzugehen. Insbesondere soll eine Lösung vorgeschlagen werden, die weniger aufwändig als die Methode des Wickelns des Stators mit durchgehenden Strängen ist, die aber gleichzeitig keine übermäßige Tiefe eines Stators, wie im Stand der Technik bekannt, erfordert oder vorzugsweise die Gefahr einer Beschädigung von Formspulen beim Einsetzen in den Stator minimiert. Zumindest soll zu bisher bekannten Lösungen eine alternative Lösung vorgeschlagen werden.

Erfindungsgemäß wird ein Verfahren zum Herstellen eines Stators mit Formspulen eines Generators einer getriebelosen Windenergieanlage vorgeschlagen. Zur Herstellung werden die Formspulen beginnend von einer beliebigen ersten Nut eingesetzt, indem zunächst eine vorbestimmte Anzahl von zuerst einzusetzenden Formspulen nur teilweise in die Nuten eingesetzt oder vor den Nuten positioniert und erst vollständig zusammen mit einer vorbestimmten Anzahl von zuletzt einzusetzenden Formspulen in die entsprechenden Nuten eingesetzt werden.

In Umlaufrichtung des Stators gesehen, sind bei einem mit Formspulen bestückten Stator zwischen den beiden Schenkeln jeder Formspule die Schenkel mehrerer anderer Formspulen eingesetzt. Demnach überschneiden oder überlappen sich also die Formspulen im in den Stator eingesetzten Zustand.

Um diese Anordnung zu erzeugen wurden bislang die als erstes in die Statornuten eingesetzten Formspulen, zum Einführen der zuletzt einzuführenden Formspulen teilweise wieder aus der Nut herausgebogen. Durch das erfindungsgemäße Herstellungsverfahren ist dieses Herausbiegen nun nicht mehr nötig, sodass keine Beschädigung der Isolierung der Formspulen oder auch kein Verbiegen der Formspulen erfolgt

Erfindungsgemäß wird eine Schablone zum Einsetzen verwendet. Die Schablone wird zumindest vor den Nuten der als erstes einzusetzenden Formspulen und vor den Nuten der als letztes einzusetzenden Formspulen positioniert. Daraufhin werden alle einzusetzenden Formspulen im Bereich der Schablone vor den Nuten an der Schablone positioniert. Die Formspulen im Bereich ohne die Schablone werden direkt in die Nuten eingelegt. Im nächsten Schritt wird die Schablone entfernt und die zuvor an der Schablone positionierten Formspulen werden gemeinsam in die für sie vorgesehenen Nuten eingeführt. Die Herstellung des Stators wird somit weiter vereinfacht.

Die folgenden Ausführungsformen gehören zur beanspruchten Erfindung. Gemäß einer weiteren Ausführungsform des Verfahrens wird der Stator beim Einsetzen der Formspulen in die Nuten in aufrechter Position, also mit einer im Wesentlichen waagerechten Rotationsachse, mit einer Hilfsvorrichtung gehalten und/oder gedreht. Hierdurch kann Personal, das die Formspulen einsetzt an einer Position verbleiben, während die Nuten am Personal "vorbeifahren". Hierdurch wird die Herstellung des Stators vereinfacht.

Gemäß einer weiteren Ausführungsform des Verfahrens weist die Schablone Haltemittel auf, sodass die an der Schablone positionierten Formspulen mit den Haltemitteln in ihrer Position gehalten werden können. Hierdurch werden die ersten einzusetzenden Formspulen sicher in Ihrer Position gehalten, wenn der Stator mit der Hilfsvorrichtung weiter gedreht wird. Ein Herunterfallen der noch nicht in die Nuten eingeführten Formspulen wird somit verhindert.

Gemäß einer weiteren Ausführungsform des Verfahrens weisen die Formspulen jeweils zwei Anschlüsse mit jeweils einem Gewinde auf. Zwei Anschlüsse unterschiedlicher Formspulen werden dann jeweils mittels einer Kupferflachstange oder eines Kupferbands, das zwei Durchbrüche aufweist, verbunden, wobei hierzu zwei Schrauben durch die Durchbrüche in das Gewinde der Anschlüsse der Formspulen, insbesondere mit einem vorbestimmten Drehmoment, eingeschraubt werden. Eine sichere elektrische Verbindung der Formspulen erfolgt durch diese Verschraubung.

Gemäß einer weiteren Ausführungsform des Verfahrens werden die Anschlüsse und die Kupferflachstange oder das Kupferband im Bereich ihrer Kontaktflächen geschliffen und/oder poliert, bevor die Verbindung hergestellt wird. Gemäß einer weiteren Ausführungsform wird die Verbindung spätestens zwei Stunden nach dem Schleifen und/oder Polieren hergestellt.

Eine Korrosion der Kupferteile wird somit vermieden, da nach der Verbindung kein Sauerstoff mehr an die miteinander verbundenen Kupferteile gelangt. Daher ist eine elektrische Verbindung mit einem besonders geringen elektrischen Widerstand gewährleistet.

Die folgenden Beispiele und Ausführungsformen gehören nicht zur beanspruchten Erfindung.

Außerdem umfasst ein Beispiel eine Schablone und/oder eine Hilfsvorrichtung zum Ausführen des Verfahrens.

Ferner umfasst ein weiteres Beispiel eine Formspule eines Stators eines Generators einer getriebelosen Windenergieanlage, insbesondere für das Verfahren. Die Formspule weist einen elektrischen Leiter mit einem ersten und einem zweiten Anschluss auf. Die Anschlüsse dienen zum elektrischen Verbinden mit einer weiteren Formspule. Ferner weisen die Anschlüsse jeweils ein Gewinde auf, um die elektrischen Verbindungen mittels Schraubverbindung herzustellen.

Somit ist das Fertigen eines Stators eines Generators einer getriebelosen Windenergieanlage möglich, indem die einzelnen Formspulen in die Nuten des Stators eingesetzt und die elektrischen Verbindungen der einzelnen Formspulen durch Schraubverbindungen hergestellt werden. Eine Hitzeentwicklung durch Löten oder Schweißen am komplettierten Generatorbeim beim Herstellen der elektrischen Verbindungen kann somit vermieden werden.

Daher können die Anschlüsse wesentlich dichter am Statorkörper angeordnet werden, ohne dass die Gefahr der Beschädigung des Stators, insbesondere einer Isolierung, besteht. Damit ist ein Stator realisierbar, der eine wesentlich geringere axiale Tiefe aufweist. Ferner ist der Stator durch einfaches Einlegen der Formspulen herstellbar, ohne dass ein aufwändiges Wickeln der Wicklungen erfolgen muss.

Vorzugsweise ist der Generator als Ringgenerator ausgebildet. Demnach sind die magnetisch aktiven Bereiche des Läufers und Stators, nämlich besonders die Blechpakete des Stators und Läufers, in einem ringförmigen Bereich um den Luftspalt angeordnet, der Läufer und Stator trennt. Dabei ist der Generator in einem inneren Bereich mit einem Radius von wenigstens 50 % des mittleren Luftspaltradius, frei von magnetisch wirksamen Bereichen.

Ein Ringgenerator kann auch dadurch definiert werden, dass die radiale Stärke der magnetisch aktiven Teilen, oder - anders ausgedrückt - des magnetisch aktiven Bereichs, nämlich die radiale Dicke vom Innenrand des Polrades bis zum Außenrand des Stators, bzw. vom Innenrand des Stators bis zum Außenrand des Läufers, im Falle eines Außenläufers, kleiner als der Luftspaltradius ist, insbesondere dass die radiale Stärke des magnetisch aktiven Bereichs des Generators weniger als 30%, insbesondere weniger als 25% des Luftspaltradius beträgt. Außerdem oder alternativ kann ein Ringgenerator dadurch definiert werden, dass ist die Tiefe, nämlich axiale Ausdehnung des Generators kleiner als der Luftspaltradius ist, insbesondere dass die Tiefe weniger als 30%, insbesondere weniger als 25% des Luftspaltradius beträgt. Außerdem oder alternativ ist ein Ringgenerator vielpolig ausgebildet und weist nämlich wenigstens 48, 96, insbesondere wenigstens 192 Rotorpole auf.

Gemäß einer weiteren Ausführungsform ist das Gewinde der Anschlüsse ein Innengewinde. Ein Innengewinde ist vorteilhaft, da die elektrischen Verbindungen der Formspulen mittels herkömmlicher Schrauben mit Außengewinde herstellbar sind. Außerdem ist ein Innengewinde gegenüber einem Außengewinde besser gegen äußere Einflüsse geschützt.

Gemäß einer weiteren Ausführungsform ist zumindest einer der Anschlüsse der Formspule bezogen auf eine Spulenlängsachse oder auf eine Parallele zur Spulenlängsachse abgewinkelt. Ferner ist der andere Anschluss bezogen auf eine Spulenlängsachse oder auf eine Parallele zur Spulenlängsachse nicht abgewinkelt. Das heißt, dass die beiden Anschlüsse bezogen auf eine Spulenlängsachse oder auf eine Parallele zur Spulenlängsachse einen unterschiedlichen Winkel aufweisen, der gemäß einer bevorzugten Ausführungsform im Bereich von 45 bis 90°, besonders bevorzugt im Bereich von 60 bis 80° liegt.

Eine Formspule weist gemäß einer Ausführungsform zwei im Wesentlichen parallele langgestreckte Schenkel auf, wobei jeder Schenkel eine Länge von mindestens 80 cm, mindestens 100 cm oder mindestens 120 cm aufweist. Ferner umfasst diese Ausführungsform der Formspule ein erstes Ende, an dem die Schenkel miteinander verbunden sind, und ein zweites Ende, an dem die Anschlüsse der Formspule vorgesehen sind.

Da in jeder Nut des Stators zwei Schenkel unterschiedlicher Formspulen vorgesehen sind, liegen die Anschlüsse der Formspulen nach Anordnung im Stator sehr eng beieinander. Durch die Abwinklung zumindest eines der Anschlüsse gegenüber dem anderen Anschluss ist jedoch eine elektrische Verbindung mit den Anschlüssen einfach herstellbar, da diese somit gut zugänglich sind. Eine elektrische Verbindung der Formspulen ist somit einfach herstellbar und es wird zudem der Gefahr eines Kurzschlusses zweier sich berührender Anschlüsse entgegengewirkt.

Gemäß einer weiteren Ausführungsform weist der Leiter mehrere Lagen, insbesondere zwei Lagen, auf. Diese mehreren Lagen sind jeweils mit einem Anschluss verbunden.

Gemäß einer besonders bevorzugten Form ist jede Lage mit einer Kupferflachstange, einem Kupferband oder einem Kupferflachdraht gebildet. Bevorzugt ist ein Kupferflachdraht, der einen rechteckigen Querschnitt aufweist und eine Höhe von 0,8 bis 1 cm und eine Breite von 1 bis 2 cm aufweist. Die mehreren Lagen des Leiters sind dann so übereinander angeordnet oder gestapelt, dass die Lagen mit einer ihrer breiteren Seite aufeinander zeigen.

Gemäß einer weiteren Ausführungsform weist die Formspule mehrere Windungen des Leiters auf. Gemäß einer besonders bevorzugten Ausführungsform umfasst die Formspule vier Windungen.

Gemäß einer weiteren Ausführungsform nimmt die Formspule mindestens drei unterschiedliche Formen an, wobei die Anschlüsse der unterschiedlichen Formen unterschiedliche Entfernungen zu einem geometrischen Mittelpunkt der Formspule aufweisen. Beim späteren Einsetzen der Formspulen in die Statornuten ist somit ein Verbinden der Formspulen in einfacher Weise möglich, da benachbarte erste Anschlüsse unterschiedliche Höhen aufweisen und benachbarte zweite Anschlüsse ebenfalls unterschiedliche Höhen aufweisen und damit in einfacher Weise zum Herstellen der elektrischen Verbindungen zugänglich sind.

Ein Leiter mit einer einfachen Lage muss vergleichsweise doppelt so dick sein wie ein Leiter mit zwei Lagen, um die gleichen elektrischen Eigenschaften wie der Leiter mit zwei Lagen zu erreichen. Der Einsatz eines vergleichsweise flachen Kupferflachdrahts ist somit zur Herstellung der Formspule in mehreren Lagen als Leiter mit mehreren Windungen vorteilhaft, da dieser vergleichsweise einfacherer biegbar ist. Eine Formspule mit mehreren Windungen ist somit besonders einfach herstellbar.

Gemäß einer weiteren Ausführungsform ist der Leiter oder jede Lage des Leiters der Formspule isoliert. Gemäß einer besonders bevorzugten Ausführungsform ist diese Isolierung eine Isolierung mittels Lack- und/oder Pulverbeschichtung. Eine Isolierung der Formspule ist somit bereits vor dem Herstellen der Formspule durch einfaches Aufbringen der Isolierschicht, z.B. eines Isolierlacks, auf den Leiter im ungeformten Zustand möglich, sodass eine sichere Isolierung einfach herstellbar ist.

Diese Isolierung dient - neben einer später in die Nuten eingelegten Nutenisolation, um die Formspule gegenüber dem ebenfalls leitenden Statormaterial zu isolieren. Somit kann auf eine komplette Umwicklung der Formspule zur Isolierung, die auch Isolierungswicklung genannt wird, vor dem Einsetzen der Formspulen in die Statornuten verzichtet werden. Eine Isolierungswicklung der Formspulen ist nachteilig, da die Isolierungswicklung die Wärmeabfuhr der Formspule im Betrieb behindert. Demnach ist eine Formspule ohne eine Umwicklung zur Isolierung, gemäß dem vorliegenden Ausführungsbeispiel, vorteilhaft in Bezug auf ihre Wärmeabfuhr.

Gemäß einer weiteren Ausführungsform sind die Anschlüsse mittels Löten oder Schweißen mit dem Leiter verbunden. Die Verbindung des Leiters mit den Anschlüssen, die das Gewinde aufweisen, ist besonders vorteilhaft durch Induktionsschweißen hergestellt.

Durch Löten oder Schweißen der Anschlüsse am Leiter wird ein besonders geringer Übergangswiderstand der Verbindungsstelle erreicht. Ein Löten oder Schweißen der Anschlüsse an den Leiter ist auch möglich, solange die Formspule noch nicht in den Stator eingesetzt ist, da die Hitzeentwicklung beim Löten oder Schweißen den Stator nicht beschädigen kann.

Gemäß einer weiteren Ausführungsform weist der Leiter im Bereich der Verbindung mit zumindest einem Anschluss eine Isolierung aus glasfaserverstärktem Kunststoff auf. Dieser dient zur Isolierung mindestens eines Teils des Leiters und/oder eines Teils des Anschlusses.

Eine Formspule, deren Leiter zum Beispiel mittels Lack- und/oder Pulverbeschichtung isoliert ist, muss zum Verlöten oder Schweißen des Anschlusses im Bereich der Löt- oder Schweißstelle abisoliert werden. Dies geschieht zum Beispiel durch Abbrennen der Isolierung in diesem Bereich. Da die Gefahr eines Kurzschlusses in benachbarten Verbindungsbereichen benachbarter Leiter mit ihren Anschlüssen nach Anordnung der Formspulen in den Nuten des Stators durch das Abisolieren besteht, verhindert der glasfaserverstärkte Kunststoff einen derartigen Kurzschluss.

Gemäß einer weiteren Ausführungsform weist die Formspule im Bereich des Anschlusses einen Abstandshalter auf, der verhindert, dass sich benachbarte Anschlüsse im Betrieb des Stators durch Vibrationen des Stators berühren und somit ein Kurzschluss erfolgen könnte. Gemäß diesen Ausführungsbeispielen wird demnach Kurzschlüssen entgegengewirkt.

Gemäß einer weiteren Ausführungsform sind der Leiter und die Anschlüsse der Formspule mit Kupfer oder einer Kupferlegierung gefertigt. Kupfer oder eine Kupferlegierung weisen vorteilhafterweise einen geringen Widerstand auf, sodass möglichst ein hoher Anteil elektrischer Energie und möglichst ein geringer Anteil thermischer Energie mit dem Generator erzeugt wird.

Ferner umfasst noch ein Beispiel einen Wicklungsaufbau eines Stators eines Generators einer Windenergieanlage. Ein Wicklungsaufbau entspricht der Gesamtheit der Formspulen mit ihren Verbindungen, die im Stator eines Generators einer Windenergieanlage zum Einsatz kommen. Der Wicklungsaufbau umfasst mehrere Formspulen, insbesondere nach einer der vorhergehenden Ausführungsformen. Die Formspulen weisen jeweils einen elektrischen Leiter mit einem ersten und einem zweiten Anschluss auf. Die Anschlüsse umfassen jeweils ein Gewinde. Ferner umfasst der Wicklungsaufbau mehrere Verbindungselemente jeweils zum elektrischen Verbinden von zwei Anschlüssen zweier Formspulen durch Schraubverbindungen.

Durch die Gewinde ist daher ein Wicklungsaufbau für einen Stator realisierbar, der eine wesentlich geringere Tiefe als ein Wicklungsaufbau für einen Stator mit herkömmlichen Formspulen aufweist. Ferner ist der Stator durch einfaches Einlegen der Formspulen herstellbar, ohne dass ein aufwändiges Wickeln der Wicklungen erfolgen muss.

Gemäß einer weiteren Ausführungsform des Wicklungsaufbaus sind die Formspulen derart miteinander verbunden, dass der Wicklungsaufbau sechsphasig ist. Das heißt, die Formspulen sind in der Art miteinander verbunden, dass sechs Stränge vorgesehen sind. Hierbei sind ein erster und ein zweiter Strang einer ersten Phase, ein dritter und ein vierter Strang einer zweiten Phase und ein fünfter und ein sechster Strang einer dritten Phase zugeordnet.

Ferner ist der Wicklungsaufbau gemäß einer weiteren Ausführungsform in mehrere parallel geschaltete Abschnitte oder Segmente unterteilt. Das heißt, die sechs Stränge sind in mehrere, z.B. 2, 4, 6 oder 8, Segmente unterteilt, wobei die gleichen Phasen oder Stränge jedes Segments parallel geschaltet sind. Dadurch erfolgt eine Reduzierung der maximal in die Stränge induzierten Spannung um ein Viertel.

Gemäß einer Ausführungsform des Wicklungsaufbaus sind die Anschlüsse zweier Formspulen mit Verbindungselementen verbunden. Die Verbindungselemente umfassen einen leitenden Verbinder, insbesondere eine Kupferflachstange oder ein Kupferband, das zwei Durchbrüche an seinen äußeren Enden aufweist. Die Enden sind gemäß einer weiteren Ausführungsform leicht abgewinkelt. Die Durchbrüche sind zum Beispiel durch Bohren hergestellt. Ferner umfasst das Verbindungselement zwei Schrauben, die insbesondere mit Messing hergestellt sind.

Demnach wird der leitende Verbinder mit seinen Durchbrüchen, also zum Beispiel Bohrlöchern, vor den Gewinden der zwei Anschlüsse von zwei unterschiedlichen Formspulen positioniert und die Schrauben durch die Durchbrüche durchgeführt und in das Gewinde des Anschlusses eingeschraubt. Eine elektrische Verbindung mit einem geringen Übergangswiderstand ist somit herstellbar.

Gemäß einer weiteren Ausführungsform des Wicklungsaufbaus weisen die Verbindungselemente sowie die Formspulen einen im Wesentlichen gleichen Wärmeausdehnungskoeffizienten auf. Hierdurch ist gewährleistet, dass trotz der im Betrieb des Wicklungsaufbaus erzeugten Wärme die Schraubverbindungen sicher halten.

Ferner umfasst ein weiteres Beispiel einen Stator eines Generators einer Windenergieanlage.

Der Stator umfasst mehrere umlaufende Nuten, wobei jeweils benachbarte Nuten einen im Wesentlichen gleichen Abstand aufweisen. In die Nuten sind Formspulen gemäß einer der vorhergehenden Ausführungsformen eingesetzt.

Durch die Gewinde ist daher Stator realisierbar, der eine wesentlich geringere Tiefe als Stator mit herkömmlichen Formspulen aufweist. Ferner ist der Stator durch einfaches Einlegen der Formspulen herstellbar, ohne dass ein aufwändiges Wickeln der Wicklungen erfolgen muss.

Gemäß einer Ausführungsform ist der Stator mit Formspulen und einem Wicklungsaufbau nach einer der vorhergehenden Ausführungsformen ausgebildet.

Eine Ausführungsform der Erfindung ergibt sich aus der Zeichnung 9. Andere Zeichnungen beschreiben die Beispiele und Ausführungsformen, die nicht zur beanspruchten Erfindung gehören. In der Zeichnung zeigt:
- Fig. 1: eine Windenergieanlage,
- Fig. 2: eine schematische Seitenansicht eines Generators,
- Fig. 3: eine erste Ansicht einer Formspule,
- Fig. 4: eine weitere Ansicht einer Formspule,
- Fig. 5: einen Ausschnitt einer perspektivischen Ansicht eines Stators,
- Fig. 6: einen Stator mit sechs eingelegten Formspulen,
- Fig. 7: eine Draufsicht eines Ausführungsbeispiels eines Generators,
- Fig. 8: eine Sicht vom Zentrum des Stators auf die Formspulen, die in einen Stator eingelegt sind und
- Fig. 9: eine Hilfsvorrichtung für das Verfahren gemäß der Erfindung.

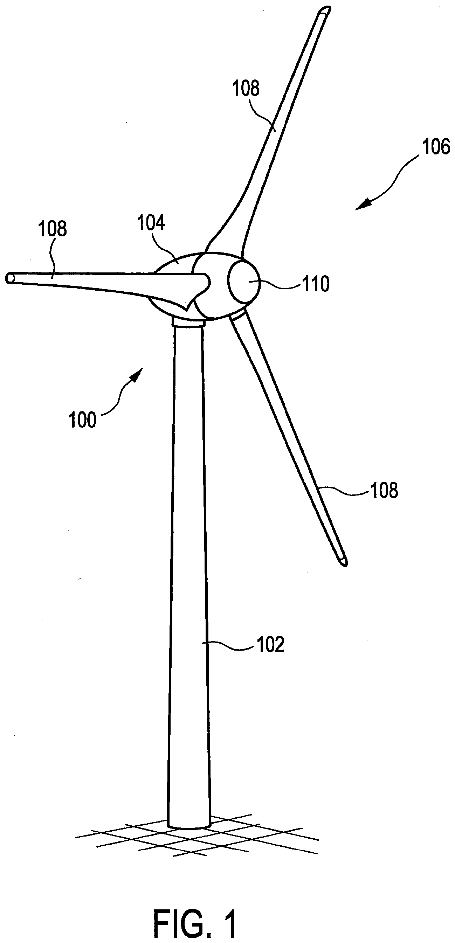

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

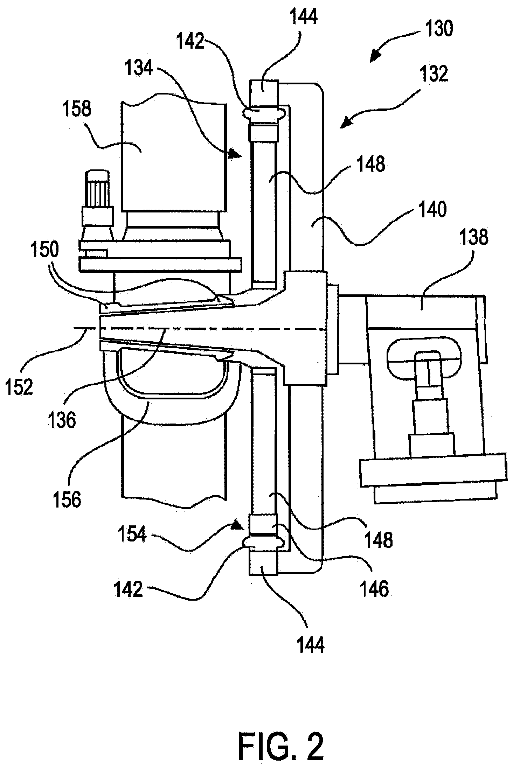

Fig. 2 zeigt einen Generator 130 schematisch in einer Seitenansicht. Er weist einen Stator 132 und einen dazu drehbar gelagerten elektrodynamischen Rotor 134 auf und ist mit seinem Stator 132 über einen Achszapfen 136 an einem Maschinenträger 138 befestigt. Der Stator 132 weist einen Statorträger 140 und Statorblechpakete 142 auf, die Statorpole des Generators 130 bilden und über einen Statorring 144 an dem Statorträger 140 befestigt sind.

Der elektrodynamische Rotor 134 weist Rotorpolschuhe 146 auf, die die Rotorpole bilden und über einen Rotorträger 148 und Lager 150 auf dem Achszapfen 136 drehbar um die Drehachse 152 gelagert sind. Die Statorblechpakete 142 und Rotorpolschuhe 146 trennt nur ein schmaler Luftspalt 154, der wenige mm dick ist, insbesondere weniger als 6 mm, aber einen Durchmesser von mehreren Metern aufweist, insbesondere mehr als 4 m.

Die Statorblechpakete 142 und die Rotorpolschuhe 146 bilden jeweils einen Ring und sind zusammen auch ringförmig, so dass der Generator 130 ein Ringgenerator ist. Bestimmungsgemäß dreht sich der elektrodynamische Rotor 134 des Generators 130 zusammen mit der Rotornabe 156 des aerodynamischen Rotors, von dem Ansätze von Rotorblättern 158 angedeutet sind.

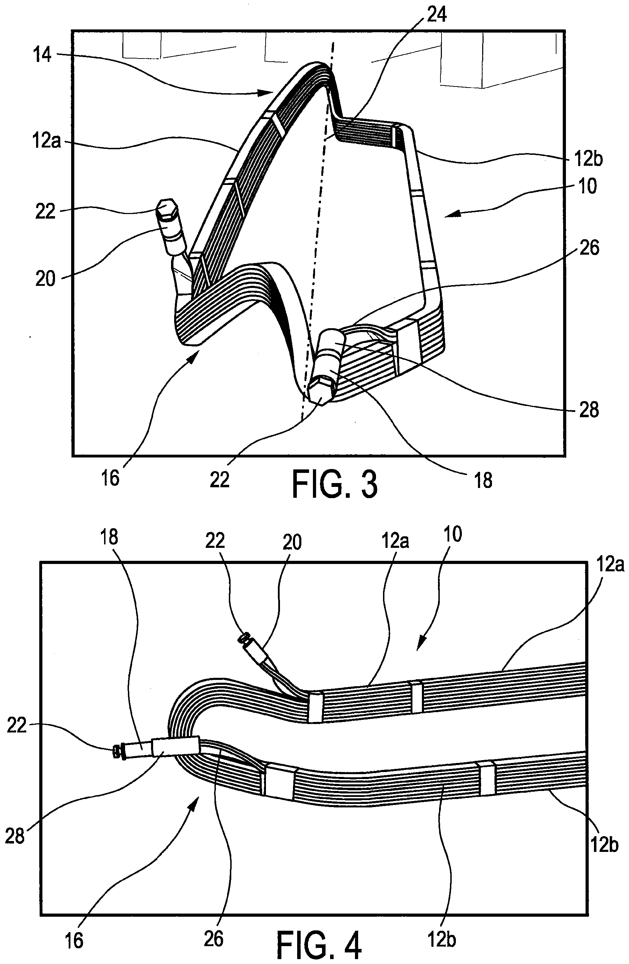

Fig. 3 zeigt eine Ansicht eines Ausführungsbeispiels einer Formspule 10. Die Formspule 10 weist zwei Schenkel 12a, 12b auf. Die Schenkel 12a, 12b verlaufen parallel zueinander und weisen eine Länge von mehr als 90 cm auf. Die beiden Schenkel 12a, 12b sind an einem ersten Ende 14 sowie an einem zweiten Ende 16 miteinander verbunden.

Das zweite Ende 16 der Formspule 10 weist einen ersten Anschluss 18 sowie einen zweiten Anschluss 20 auf. Die Anschlüsse 18, 20 weisen ein Innengewinde auf. In das Innengewinde der Anschlüsse 18, 20 sind Schrauben 22 eingedreht. Bezogen auf eine Spulenlängsachse 24 oder auf eine Parallele zur Spulenlängsachse 24 ist der zweite Anschluss 20 abgewinkelt und der erste Anschluss 18 nicht abgewinkelt.

Die Formspule 10 umfasst einen Leiter 26 und die Anschlüsse 18 und 20, die mit Kupfer gefertigt sind. Ferner sind die Schrauben 22 mit Messing gefertigt. Der Leiter 26 besteht aus zwei Lagen eines Flachdrahts, die in vier Windungen geformt sind. Das heißt, mit den beiden Anschlüssen 18, 20 sind zwei Lagen des Flachdrahts, der auch Kupferflachdraht genannt wird, verbunden.

Die Formspule 10 ist also mit diesen zwei Lagen und vier Windungen geformt, sodass im Bereich der Schenkel 12a, 12b und im Bereich des ersten Endes 14 acht Lagen des Kupferflachdrahts übereinander angeordnet oder gestapelt sind.

Aufgrund der herausgeführten Anschlüsse 18, 20 sind im Bereich des zweiten Endes 16 noch sechs Lagen übereinander angeordnet. Der Kupferflachdraht ist durch Lackieren isoliert. Im Verbindungsbereich des Leiters 26 mit den Anschlüssen 18, 20 ist die Isolierung jedoch entfernt worden, um die Anschlüsse 18, 20 durch Induktionsschweißen mit dem Leiter 26 zu verbinden. Im Bereich der Verbindung des ersten Anschlusses 18 mit dem Leiter 26 ist ein glasfaserverstärkter Kunststoff 28 angebracht, um diesen von der Isolierung des Leiters 26 befreiten Teil wieder zu isolieren.

Gemäß einem nicht dargestellten Ausführungsbeispiel ist ein derartiger glasfaserverstärkter Kunststoff auch im Verbindungsteil zwischen dem zweiten Anschluss 20 und dem Leiter 26 vorgesehen. Damit die Formspule 10 ihre Form bewahrt, sind die Lagen der Formspule in schmalen Bereichen umwickelt. Eine Isolationswicklung ist jedoch nicht vorhanden.

Fig. 4 zeigt eine weitere Ansicht der Formspule 10, wobei hier das zweite Ende 16 mit einem Teil der Schenkel 12a, 12b von der Seite dargestellt ist. Das in Fig. 4 dargestellte Ausführungsbeispiel der Formspule entspricht dem Ausführungsbeispiel der Formspule in Fig. 3.

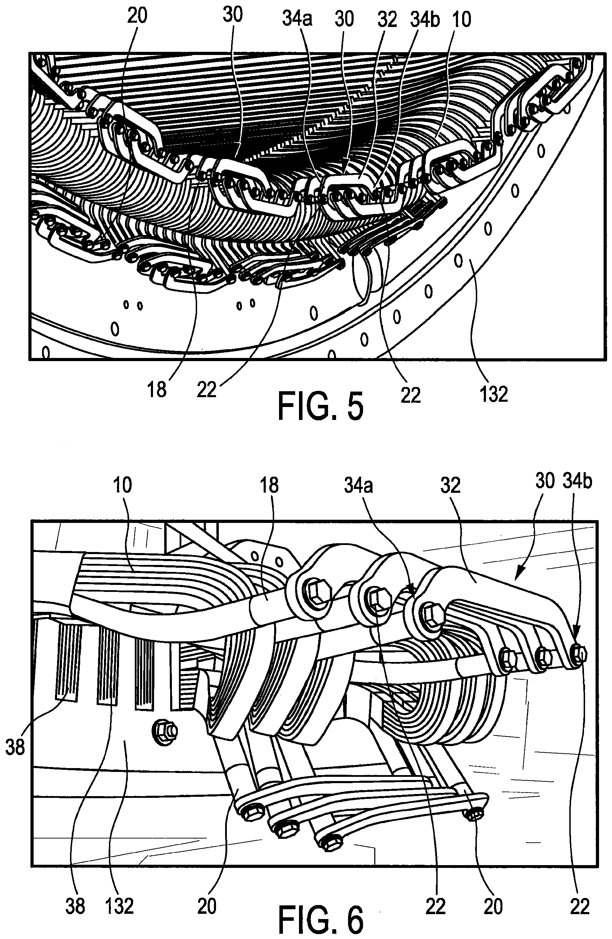

Fig. 5 zeigt eine perspektivische Ansicht eines Stators 132 eines Generators 130 einer Windenergieanlage 100 mit Formspulen 10. Die Formspulen 10 weisen jeweils einen ersten Anschluss 18 und einen zweiten Anschluss 20 auf. Die ersten Anschlüsse 18 der Formspulen 10 sind jeweils mit ersten Anschlüssen 18 anderer Formspulen 10 verbunden. Gleiches gilt für die zweiten Anschlüsse 20 der Formspulen 10.

Die Verbindungen sind durch Verbindungselemente 30 hergestellt. Die Verbindungselemente 30 umfassen jeweils eine Flachstange 32, die an ihrem Ende 34a, 34b jeweils einen Durchbruch aufweist. Diese Durchbrüche sind gemäß der Darstellung nicht erkennbar, da Schrauben 22 durch die Durchbrüche in die Anschlüsse 18, 20 eingeschraubt sind. Die Flachstangen 32 weisen eine U-Form auf, sodass jeder sechste erste Anschluss 18 und jeder sechste zweite Anschluss 20 durch ein derartiges Verbindungselement 30 verbunden ist, ohne dass das Verbindungselement 30 in Berührung mit anderen Anschlüssen 18, 20, die nicht miteinander verbunden werden sollen, steht. Daher sind die Verbindungselemente 30 nicht isoliert.

Ferner ist erkennbar, dass die Verbindungselemente 30 in verschiedenen Ebenen angeordnet sind. Dies ist möglich, da die Anschlüsse 18, 20 benachbarter Formspulen 10 unterschiedlich weit hervorstehen.

Die Verbindungselemente 30, die mit den zweiten Anschlüssen 20 verbunden sind, weisen Durchbrüche auf, die weiter voneinander beabstandet sind als die Durchbrüche der Verbindungselemente 30, die mit dem ersten Anschluss 18 verbunden sind. Dies liegt daran, dass - ausgehende von einem Zentrum des Stators 132 aus - die zweiten Anschlüsse 20 auf einem größeren Radius liegen als die ersten Anschlüsse 18.

Ferner sind die Flachstangen 32 der Verbindungselemente 30 gekröpft oder leicht abgewinkelt, damit die Schrauben 22 sauber in die Gewinde der zweiten Anschlüsse 20 eingreifen können.

Fig. 6 zeigt einen exemplarischen Aufbau eines Stators 132, in dessen Nuten 38 sechs Formspulen 10 eingesetzt sind. Die Formspulen 10 sind mittels Verbindungselementen 30 miteinander verbunden. Hier sei darauf hingewiesen, dass die elektrische Verbindung nur zu Testzwecken der Herstellung der Schraubverbindung hergestellt ist. Die Verschaltung der Spulen im späteren Einsatz unterscheidet sich von der dargestellten Schaltung und ist demnach nur exemplarisch. Bei der in Fig. 6 dargestellten Verschaltung handelt es sich nämlich um einen in sich geschlossenen Strang, also einen Kurzschluss. Alle zwölf Anschlüsse der sechs Spulen sind nämlich miteinander verbunden.

In den Nuten 38, die nicht mit Formspulen 10 belegt sind, ist im linken Bereich der Figur auch die geblechte Ausführung des Stators 132 zu erkennen.

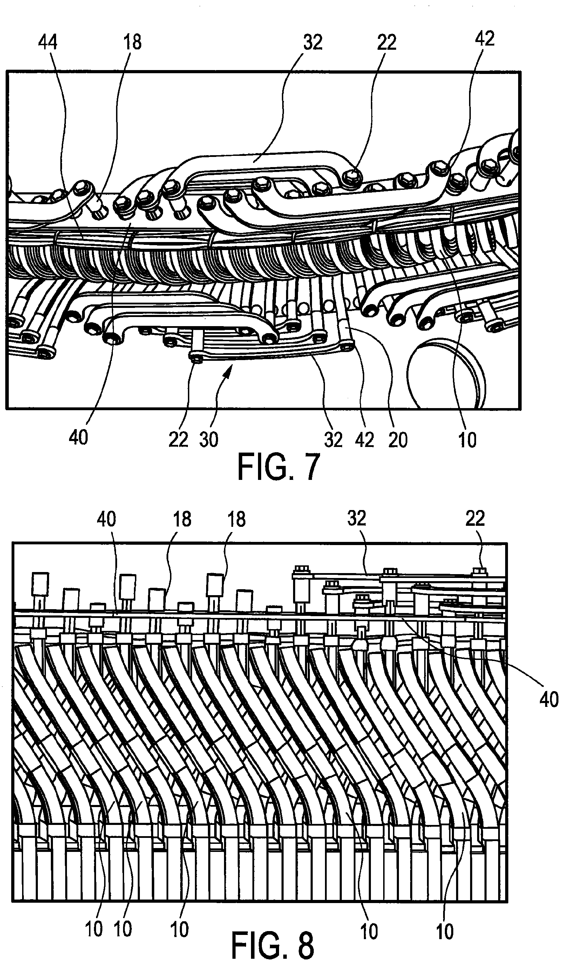

Fig. 7 zeigt eine ähnliche Darstellung wie Fig. 5, wobei nun ein Ausschnitt vergrößert dargestellt ist. Wieder sind die Formspulen 10 zu erkennen, die jeweils einen ersten Anschluss 18 sowie einen zweiten Anschluss 20 aufweisen. Die ersten Anschlüsse 18 weisen einen Abstandshalter 40 auf. Der Abstandshalter 40 der Vermeidung von Kurzschlüssen, damit sich nämlich benachbarte erste Anschlüsse 18 durch Vibrationen nicht berühren.

Ferner ist erkennbar, dass benachbarte Formspulen unterschiedlich lang hinausragende Anschlüsse 18, 20 aufweisen. Hierdurch ergibt sich ein sägezahnartiger Verlauf der Höhen der Anschlüsse 18, 20. Die Verbindungselemente 30 weisen gemäß dem dargestellten Ausführungsbeispiel neben dem elektrischen Verbinder 32, die hier eine Flachstange 32 ist, sowie den Schrauben 22 Scheiben 42 auf, die die Kraftverteilung der Schraube 22 auf die Flachstange 32 beim Einschrauben in das Gewinde der Anschlüsse 18, 20 verbessern. Demnach weist ein Verbindungselement 30 gemäß einem bevorzugten Ausführungsbeispiel eine Flachstange 32, zwei Schrauben 22 sowie zwei Scheiben 42 auf.

Die Abstandshalter 40 entsprechen einer Kunststoffleiste mit mehreren Bohrungen, durch die mehrere Anschlüsse 18, 20 beabstandet durchgeführt werden, bevor die Verbindungselemente 30 angebracht werden. Ferner ist noch ein Bündel von Datenleitungen 44 dargestellt, mit dem zum Beispiel Temperatursensoren mit einer Auswertevorrichtungen verbunden sind.

Dadurch dass, elektrische Verbinder 32 eine U-Form aufweisen und die Formspulen 10 in drei verschiedenen Formen mit drei unterschiedlich langen Anschlussbereichen vorgesehen sind, sind die Verbindungselemente 30 in Dreiergruppen angeordnet. Die Enden der gleichen Seite von U-förmigen, elektrischen Verbindern 32 einer Gruppe 60b sind zwischen die Enden beider Seiten von U-förmigen elektrischen Verbindern 32 einer anderen Gruppe angeordnet. Die Enden der gleichen Seite von U-förmigen leitenden Verbindern 32 einer Gruppe sind zwischen die Enden beider Seiten von U-förmigen leitenden Verbindern 32 einer anderen Gruppe angeordnet. In axialer Richtung kann der Stator 132 daher mit besonders geringerem Platzbedarf realisiert werden.

Fig. 8 zeigt eine Seitenansicht aus dem Zentrum des Stators auf die Formspulen 10. Hier ist das zuvor genannte sägezahnartige Profil der Anschlüsse 18, 20, hier der ersten Anschlüsse 18, besonders gut zu erkennen. In der linken Hälfte des Bildes sind erste Anschlüsse 18 erkennbar, die nicht mit Verbindungselementen 30 mit anderen Anschlüssen 18 verbunden sind. Diese Anschlüsse 18 dienen demnach als Anschlüsse zur Verbindung mit nicht dargestellten Generatorklemmen.

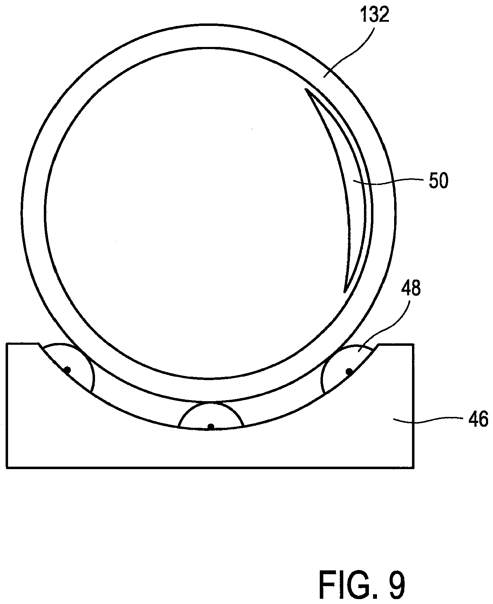

Zuletzt zeigt Fig. 9 eine Hilfsvorrichtung 46 für das Verfahren gemäß der Erfindung. Die Hilfsvorrichtung 46 umfasst drei drehbare Walzen 48 auf denen der Stator 132 aufrecht stehend gelagert ist. Der Stator ist um seine Rotationsachse oder sein rotationssymmetrische Achse also eine Achse durch sein Zentrum mit der Hilfsvorrichtung 46 drehbar. Ferner ist eine Schablone 50 als Hilfe zum Einlegen der Formspulen 10 dargestellt. Die Schablone 50 ist vor einer Anzahl von zur besseren Übersicht nicht dargestellten Nuten 38 angeordnet und wird an dieser Position, z.B. durch eine lösbare Verbindung mit lösbaren Verbindungsmitteln, fest gehalten, während der Stator 132 auf der Hilfsvorrichtung 46 zum Einlegen der Formspulen rotiert wird.

Personal setzt nun der Reihe nach - je nach Drehrichtung des Stators 132 mit der Hilfsvorrichtung 46 - die Formspulen 10 entweder in die Nuten 38 ein oder befestigt diese lösbar an der Schablone 50. Hierbei kann das Personal im unteren Bereich in der Mitte des Stators 132 ohne Leiter arbeiten, da die Hilfsvorrichtung 46 den Stator 132, der einen Durchmesser von mehreren Metern aufweist, eine Leiter oder ein Gerüst unnötig macht.

Nachdem der Stator 132 vollständig bestückt ist, wird der Stator 132 mit der Hilfsvorrichtung 46 so gedreht, dass die Schablone im unteren Bereich des Stators 132 angeordnet ist. Daraufhin werden die lösbaren Verbindung der Schablone 50 mit dem Stator und den Formspulen gelöst und die Formspulen 10, die wegen der Schablone 50 noch nicht in die Nuten 38eingesetzt waren, gemeinsam in die Nuten eingesetzt.

Zur besseren Übersicht sind die Formspulen 10 nicht dargestellt.

## Patentansprüche

1. Verfahren zum Herstellen eines Stators eines Generators einer getriebelosen Windenergieanlage,
wobei nacheinander benachbarte Formspulen (10) in Nuten (38) eines Stators (132) eingesetzt werden, indem eine vorbestimmte Anzahl der ersten einzusetzenden Formspulen (10) nur teilweise in die Nuten (38) eingesetzt oder vor den Nuten (38) positioniert werden und erst vollständig zusammen mit einer vorbestimmten Anzahl der zuletzt einzusetzenden Formspulen (10) in die entsprechenden Nuten (38) eingesetzt werden,
wobei eine Schablone zum Einsetzen verwendet wird, die zumindest vor den Nuten (38) der als erstes einzusetzenden Formspulen (10) und der als letztes einzusetzenden Formspulen (10) positioniert wird, sodann
alle einzusetzenden Formspulen (10) im Bereich der Schablone (50) vor den Nuten (38) an der Schablone positioniert und im Bereich ohne die Schablone (50) in die Nuten (38) eingelegt werden, daraufhin
die Schablone (50) entfernt wird und
die zuvor an der Schablone positionierten Formspulen (10) gemeinsam in die für sie vorgesehenen Nuten (38) eingeführt werden.

2. Verfahren nach Anspruch 1,
wobei der Stator (132) beim Einsetzen der Formspulen (10) in die Nuten (132) aufrecht, also mit einer im Wesentlichen waagerechten Rotationsachse mit einer Hilfsvorrichtung (46) gehalten und/oder gedreht wird.

3. Verfahren nach Anspruch 1 oder 2,
wobei die Schablone Haltemittel aufweist, um mehrere an der Schablone positionierte Formspulen (10) in ihrer Position zu halten.

4. Verfahren nach einem der Ansprüche 1 bis 3,
wobei die Formspulen (10) jeweils zwei Anschlüsse (18, 20) mit jeweils einem Gewinde aufweisen und zwei Anschlüsse (18, 20) unterschiedlicher Formspulen (10) mittels einem leitenden Verbinder (32), insbesondere einer Kupferflachstange oder einem Kupferband, mit zwei Durchbrüchen verbunden werden, wobei hierzu zwei Schrauben (22), insbesondere aus Messing, durch die Durchbrüche in das Gewinde der Anschlüsse (18, 20) eingeschraubt werden.

5. Verfahren nach einem der Ansprüche 1 bis 4,
wobei die Anschlüsse (18, 20) und der leitenden Verbinder (32) im Bereich ihrer Kontaktflächen geschliffen und/oder poliert werden, bevor die Verbindung hergestellt wird.

6. Verfahren nach einem der Ansprüche 1 bis 5,
- wobei der komplettierte Stator (132) vollständig in ein Harzbad oder flüssiges Harz eingetaucht wird und wieder aus dem Harz entfernt wird, um das am Stator anhaftende Harz aushärten zu lassen.

## Claims

1. A method for producing a stator of a generator of a gearless wind power installation, wherein adjacent form-wound coils (10) are inserted into slots (38) of a stator (132) in succession, by a predetermined number of the first form-wound coils (10) to be inserted being inserted only partially into the slots (38) or being positioned in front of the slots (38) and only being fully inserted into the corresponding slots (38) together with a predetermined number of the form-wound coils (10) to be inserted last,
wherein a template is used for the insertion, which template is positioned at least in front of the slots (38) of the form-wound coils (10) to be inserted first and of the form-wound coils (10) to be inserted last, then
all of the form-wound coils (10) to be inserted, in the region of the template (50), are positioned in front of the slots (38) on the template and, in the region without the template (50), are inserted into the slots (38), subsequently
the template (50) is removed and
the form-wound coils (10) previously positioned on the template are jointly introduced into the slots (38) provided for them.

2. The method as claimed in claim 1,
wherein the stator (132) is held and/or rotated upright, that is to say with a substantially horizontal axis of rotation, by way of an auxiliary apparatus (46) when the form-wound coils (10) are inserted into the slots (132).

3. The method as claimed in claim 1 or 2,
wherein the template has holding means in order to hold a plurality of form-wound coils (10) which are positioned on the template in their position.

4. The method as claimed in one of claims 1 to 3,
wherein the form-wound coils (10) each have two connections (18, 20) with in each case one thread, and two connections (18, 20) of different form-wound coils (10) are connected by means of a conductive connector (32), in particular a flat copper bar or a copper strip, with two apertures, wherein two screws (22), in particular composed of brass, are screwed through the apertures into the thread of the connections (18, 20) for this purpose.

5. The method as claimed in one of claims 1 to 4,
wherein the connections (18, 20) and the conductive connector (32) are ground and/or polished in the region of their contact areas, before the connection is established.

6. The method as claimed in one of claims 1 to 5,
wherein the completed stator (132) is fully immersed into a resin bath or liquid resin and is removed from the resin again in order to allow the resin adhering to the stator to cure.

## Revendications

1. Procédé pour fabriquer un stator d'un générateur d'une éolienne à entraînement direct,
dans lequel des bobines préformées (10) adjacentes sont insérées les unes après les autres dans des rainures (38) d'un stator (132) en ce qu'un nombre prédéfini des premières bobines préformées (10) à insérer sont insérées seulement en partie dans les rainures (38) ou sont positionnées devant les rainures (38) et sont insérées dans les rainures (38) correspondantes seulement en totalité conjointement avec un nombre prédéfini des bobines préformées (10) à insérer en dernier lieu,
dans lequel est utilisé pour l'insertion un gabarit, qui est positionné au moins devant les rainures (38) des bobines préformées (10) à insérer en premier et des bobines préformées (10) à insérer en dernier dès lors que
toutes les bobines préformées (10) à insérer sont positionnées sur le gabarit dans la zone du gabarit (50) devant les rainures (38) et sont placées dans les rainures (38) dans la zone sans le gabarit (50), puis
le gabarit (50) est retiré et
les bobines préformées (10) positionnées au préalable sur le gabarit sont introduites conjointement dans les rainures (38) qui leur sont dédiées.

2. Procédé selon la revendication 1,
dans lequel le stator (132) est maintenu et/ou tourné avec un dispositif auxiliaire (46) lors de l'insertion des bobines préformées (10) dans les rainures (132) à la verticale, donc avec un axe de rotation sensiblement horizontal.

3. Procédé selon la revendication 1 ou 2,
dans lequel le gabarit présente des moyens de maintien pour maintenir plusieurs bobines préformées (10) positionnées sur le gabarit dans leur position.

4. Procédé selon l'une quelconque des revendications 1 à 3,
dans lequel les bobines préformées (10) présentent respectivement deux raccords (18, 20) avec respectivement un filetage et deux raccords (18, 20) de différentes bobines préformées (10) sont reliés au moyen d'un connecteur (32) conducteur, en particulier d'une tige plate en cuivre ou d'une bande en cuivre, à deux ajours, dans lequel deux vis (22), en particulier en laiton, sont à cet effet vissées dans le filetage des raccords (18, 20) à travers les ajours.

5. Procédé selon l'une quelconque des revendications 1 à 4,
dans lequel les raccords (18, 20) et le connecteur (32) conducteur sont poncés et/ou polis dans la zone de leurs surfaces de contact avant que la liaison ne soit établie.

6. Procédé selon l'une quelconque des revendications 1 à 5,
- dans lequel le stator (132) complété est enfoncé en totalité dans un bain de résine ou une résine liquide et est retiré à nouveau de la résine pour faire durcir la résine adhérant au stator.
